# EUROPÄISCHE PATENTANMELDUNG

(11) **EP 1 199 784 A1**
(43) Veröffentlichungstag der Anmeldung: **24.04.2002**
(21) Anmeldenummer: 00810967.0
(22) Anmeldetag: 19.10.2000
(51) Int. Cl.: H02J 9/06

(54) **Stromerzeugungsanlage sowie Verfahren zu deren Steuerung und Regelung**

(71) Anmelder: ABB RESEARCH LTD., 8050 Zürich (CH)
(72) Erfinder: Rehtanz, Christian, 5405 Baden-Dättwil (CH); Golle, Ingo, 5412 Gebenstorf (CH)
(74) Vertreter: ABB Patent Attorneys

(57) **Zusammenfassung**

Die erfindungsgemässe Stromerzeugungsanlage weist einen mit einer Antriebseinheit (1), insbesondere mit einer Turbine gekoppelten Generator (2) auf, der über einen aus einem Gleichrichter (3), einem Gleichspannungszwischenkreis (4) und einem Wechselrichter (5) bestehenden Umrichter (14) mit einem über einen Schalter (91) mit einem externen Stromversorgungsnetz (10) sowie wenigstens einer Last (8, 9) verbundenen Netzteilbereich, insbesondere einer Sammelschiene (7), verbindbar ist. Zur Steuerung und Regelung der Stromerzeugungsanlage dient eine Kontrolleinheit (100), die ein Überwachungsmodul (80) aufweist, das zur Feststellung des Zustandes des externen Stromversorgungsnetzes (10) dient und die Betriebsarten der Stromerzeugungsanlage zumindest entsprechend den Zuständen "Netz normal" und "Netz ausgefallen" umschaltet, wobei
a) bei der Betriebsart "Netz normal", bei Vorgabe einer Antriebsleistung (P_{T}), die Stromerzeugungsanlage derart steuerbar und regelbar ist, dass die Spannung (U_{DC}) am Gleichspannungszwischenkreis (4) durch Änderung des vom Wechselrichter (5) an die Last (8, 9) abgegebenen und gegebenenfalls in das externe Stromversorgungsnetz (10) eingespeisten Stromes (I₁) auf einem vorgegebenen Sollwert (U_{DC ref}) gehalten wird und
b) bei der Betriebsart "Netz ausgefallen" die Stromerzeugungsanlage derart steuerbar und regelbar ist, dass die Verbindung zum externen Stromversorgungsnetz (10) trennbar, die der Last (8, 9) zur Verfügung gestellte Spannung (U₁) durch den Wechselrichter (5) auf einen vorgesehenen Wert (U_{1 ref}) einstellbar und die Spannung (U_{DC}) am Gleichspannungszwischenkreis (4) durch Änderung der Leistung (P_{T}) der Antriebseinheit (1) auf einen vorgegebenen Sollwert (U_{DC ref}) regelbar ist.

## Beschreibung

### Technisches Gebiet

Die Erfindung betrifft eine mit einem öffentlichen oder privaten Stromversorgungsnetz verbindbare, insbesondere für den dezentralen Einsatz vorgesehene Stromerzeugungsanlage nach dem Oberbegriff des Patentanspruches 1 sowie ein Verfahren zur Steuerung und Regelung dieser Stromerzeugungsanlage nach dem Oberbegriff des Patentanspruches 8.

### Stand der Technik

Aus den Patentschriften U.S. 5,903,116 und U.S. 6,031,294 ist bekannt, dass als Alternative zu grösseren Kraftwerken vermehrt dezentral installierte Turbogeneratoren bzw. kleinere mit einem Generator gekoppelte Gasturbinen eingesetzt werden. Eigenerzeugungsanlagen dieser Art werden hauptsächlich im Netzverbund betrieben, bei dem ein externes Stromversorgungsnetz als Puffer gegenüber Verbraucher- und Einspeiseschwankungen dient.

Für die Versorgung der Verbraucher nach einem Netzausfall, bei dem die Eigenerzeugungsanlage vom Netz getrennt wird, wurden bisher unterbruchsfreie Stromversorgungsanlagen mit einem Energiespeicher verwendet, durch den die benötigte Energie mit hoher Versorgungsqualität für eine limitierte Zeitdauer geliefert werden kann. Alternativ dazu werden Notstromaggregate eingesetzt, die eine Stromversorgung mit deutlich reduzierter Versorgungsqualität über grössere Zeiträume erlauben.

### Darstellung der Erfindung

Der vorliegenden Erfindung liegt daher die Aufgabe zugrunde, eine mit einem externen Stromversorgungsnetz verbindbare Stromerzeugungsanlage zu schaffen, welche beim Ausfall des externen Stromversorgungsnetzes die weitere Stromversorgung für einen zu versorgenden Netzteilbereich unterbruchsfrei, zeitlich praktisch nicht limitiert und mit hoher Versorgungsqualität gewährleistet.

Diese Aufgabe wird durch eine Stromerzeugungsanlage mit den Merkmalen des Patentanspruches 1 sowie durch ein Verfahren zur Steuerung und Regelung dieser Anlage gemäss Anspruch 8 gelöst. Vorteilhafte Ausgestaltungen der Erfindung sind in weiteren Ansprüchen angegeben.

Die erfindungsgemässe Stromerzeugungsanlage weist einen mit einer Antriebseinheit, beispielsweise mit einer Turbine gekoppelten Generator auf, der über einen aus einem Gleichrichter, einem Gleichspannungszwischenkreis und einem Wechselrichter bestehenden Umrichter mit einem verbraucherseitig angeordneten Netzteilbereich, beispielsweise einer Sammelschiene verbindbar ist, die an Lasten der Verbraucher sowie über einen Schalter an ein externes Stromversorgungsnetz anschliessbar ist. Zur Steuerung und Regelung der Stromerzeugungsanlage ist eine Kontrolleinheit vorgesehen, die ein Überwachungsmodul aufweist, das zur Feststellung des Zustandes des externe Stromversorgungsnetzes dient und das die Betriebsarten der Stromerzeugungsanlage normalerweise entsprechend den beiden Zuständen "Netz normal" und "Netz ausgefallen" umschaltet. Beim störungsfreien Betrieb, in der Betriebsart "Netz normal", wird die Spannung am Gleichspannungszwischenkreis durch Änderung des vom Wechselrichter an die Last abgegebenen und gegebenenfalls in das externe Stromversorgungsnetz eingespeisten Stromes auf einem vorgegebenen Sollwert gehalten, wodurch ein Gleichgewicht der eingestellten von der Turbine zugeführten und der an das externe Stromversorgungsnetz abgegebenen Energie erzielt wird.

Beim Ausfall des externen Stromversorgungsnetzes wird auf die Betriebsart "Netz ausgefallen" umgestellt und die Verbindung zum externen Stromversorgungsnetz getrennt. Ferner wird die der Last zur Verfügung gestellte Spannung durch den Wechselrichter auf einen vorgesehenen Wert eingestellt und die Spannung am Gleichspannungszwischenkreis durch Änderung der Leistung der Antriebseinheit auf einem vorgegebenen Sollwert gehalten, wodurch wiederum ein Gleichgewicht der von der Turbine zugeführten und der an das externe Stromversorgungsnetz abgegebenen Energie erzielt wird.

Vorzugsweise ist eine dritte Betriebsart vorgesehen, die Fälle berücksichtigt, bei denen das externe Stromversorgungsnetz nicht genügend Leistung für alle Lasten zur Verfügung stellt. Bei dieser als "Netz schwach" bezeichneten Betriebsart wird die Stromerzeugungsanlage derart gesteuert und geregelt, dass der vom externen Stromversorgungsnetz gelieferte Strom gemessen und durch Änderung des vom Wechselrichter abgegebenen Stromes auf einen vorgegebenen Grenzwert limitiert oder geregelt wird. Stromerzeugungsanlagen, die diese Betriebsart unterstützen, sind insbesondere in den Fällen besonders vorteilhaft einsetzbar, in denen ein Verbraucher seine Last erweitern, aber auf einen teuren Netzausbau verzichten will.

Erfindungsgemässe Stromerzeugungsanlagen bieten daher aus wirtschaftlicher und technischer Sicht bedeutende Vorteile. Der Verbraucher kann damit eine kostengünstige und qualitativ hochwertige Notstromversorgung für seinen Betrieb erzielen. Durch Rückspeisung von Energie ins externe Stromversorgungsnetz während des Normalbetriebs "Netz normal" entstehen gleichzeitig weitere Kostenvorteile.

Das Regelungskonzept für die erfindungsgemässe Stromerzeugungsanlagen erlaubt zudem einen unterbruchsfreien Übergang zwischen den einzelnen Betriebsarten, so dass ein hoher Anwenderkomfort und nur ein minimaler Betriebsaufwand entsteht.

Vorgesehen sind ferner einfache Adaptionsmassnahmen, um einen Betrieb der Anlage und Änderungen der Betriebsarten auch unter erschwerten Bedingungen zu gewährleisten.

### Kurze Beschreibung der Zeichnungen

Nachstehend wird der Erfindungsgegenstand anhand von bevorzugten Ausführungsbeispielen, welche in den beiliegenden Zeichnungen dargestellt sind, näher erläutert. Es zeigen rein schematisch:
- Figur 1: eine erfindungsgemässe Stromerzeugungsanlage mit Kontrolleinheit in der die zur Steuerung und Regelung der Stromerzeugungsanlage benötigten Module vorgesehen sind und
- Figur 2: die erfindungsgemässe Stromerzeugungsanlage im Verbund mit einem externen Stromversorgungsnetz.

Die in den Zeichnungen verwendeten Bezugszeichen und deren Bedeutung sind in der Bezugszeichenliste zusammengefasst aufgelistet.

### Wege zur Ausführung der Erfindung

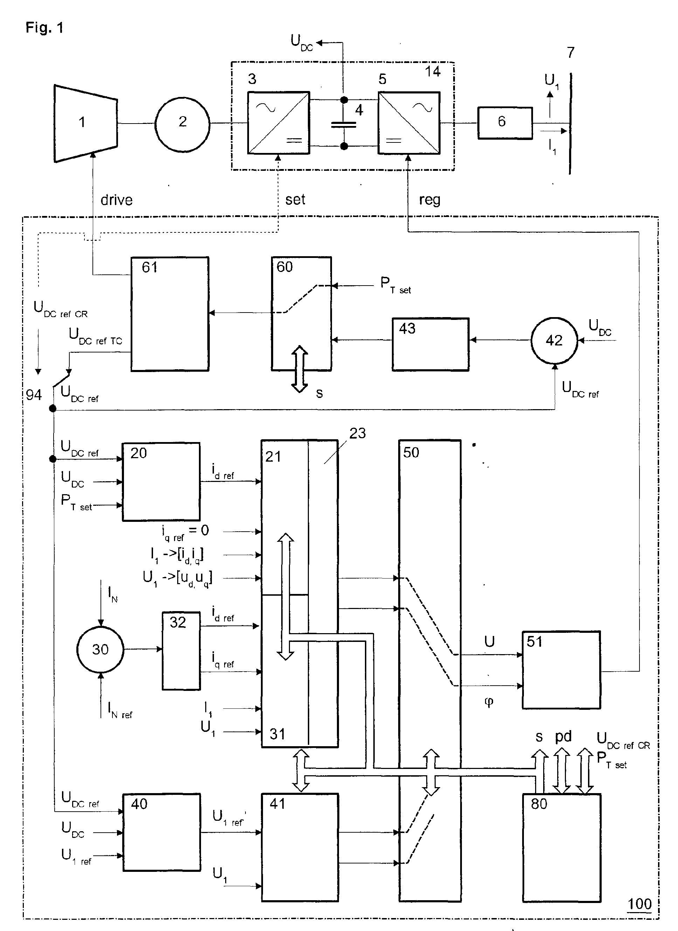

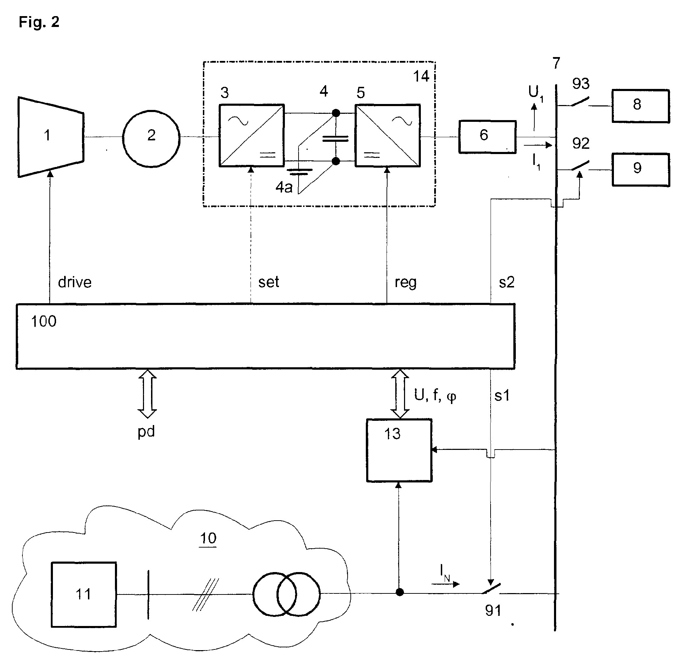

Die Figuren 1 und 2 zeigen die erfindungsgemässe Stromerzeugungsanlage, die einen mit einer Antriebseinheit 1, beispielsweise mit einer Turbine gekoppelten Generator 2 aufweist, der über einen aus einem Gleichrichter 3, einem Gleichspannungszwischenkreis 4 und einem Wechselrichter 5 bestehenden Umrichter 14 und ein Filter 6 mit einem Netzteilbereich, im vorliegenden Fall mit einer Sammelschiene 7 verbunden ist. Aus Fig. 2 ist ersichtlich dass die Sammelschiene 7 über Schalter 92, 93 an zwei Lasten 8, 9 sowie über einen Schalter 91 an ein externes Stromversorgungsnetz 10 angeschlossen ist, das von einer externen Stromerzeugungsanlage 11 gespeist wird. Zur Steuerung und Regelung ist eine Kontrolleinheit 100 vorgesehen, die es erlaubt, die erfindungsgemässe Stromerzeugungsanlage unter Berücksichtigung des Betriebszustandes des externen Stromversorgungsnetzes 10 stets in einer technisch und wirtschaftlich optimalen Betriebsart zu betreiben.

Die Kontrolleinheit 100, der Prozessdaten pd aus der Stromerzeugungsanlage sowie aus dem externen Stromversorgungsnetz zuführbar sind, weist ein Überwachungsmodul 80 auf, das den jeweiligen Betriebszustand des externen Stromversorgungsnetzes 10 feststellt und in Abhängigkeit davon die Betriebsart der Stromerzeugungsanlage einstellt. Primär unterscheidet die Kontrolleinheit 100 zwischen dem Betriebszustand "Netz normal", während dem die Stromversorgung des externen Stromversorgungsnetzes 10 die zu erwartende Qualität aufweist und dem Betriebszustand "Netz ausgefallen", während dem die Qualität der Stromversorgung des externen Stromversorgungsnetzes 10 die Minimalbedingungen nicht erfüllt. In einer weiteren vorzugsweisen Ausgestaltung ist die erfindungsgemässe Stromerzeugungsanlage für den Betrieb im Verbund mit einem externen Stromversorgungsnetz von beschränkter Leistungsfähigkeit ausgelegt.

Der Ausfall des externen Stromversorgungsnetzes wird bespielsweise durch eine aktive Impedanzmessung ermittelt oder durch den Leistungsschalter im Netzanschluss festgestellt.

In der Betriebsart "Netz normal" erfolgt die Stromversorgung der Lasten 8 und 9 gemeinsam durch die erfindungsgemässe Stromerzeugungsanlage und das externe Stromversorgungsnetz 10, durch das sowohl die Spannung am Netzanschlusspunkt, als auch deren Frequenz vorgegeben ist. Bei geringem Energiebedarf der Lasten 8 und 9 speist die Stromerzeugungsanlage Energie in das externe Stromversorgungsnetz 10 ein.

Die Antriebseinheit 1, die mit einer vorgegebenen Leistung P_{T set} betrieben wird, lädt dabei über den Generator 2 und den Gleichrichter 3 den Gleichspannungszwischenkreis auf 4 auf eine Spannung U_{DC} auf. Aus Fig. 1 ist ersichtlich, dass die entsprechende Führungsgrösse P_{T set} einem der Antriebseinheit 1 zugeordneten Antriebsmodul 61 über einen Eingangswähler 60 zuführbar ist.

Durch Steuerung des Wechselrichters 5 wird gewährleistet, dass die dem Zwischenkreis 4 vom Generator 2 zugeführte Leistung, diesem wieder entnommen und an die Lasten 8, 9 oder an das externe Stromversorgungsnetz 10 abgegeben wird. Erfindungsgemäss wird dazu die Spannung U_{DC} am Gleichspannungszwischenkreis 4 durch Änderung des vom Wechselrichter 5 an die Last 8, 9 abgegebenen und gegebenenfalls in das externe Stromversorgungsnetz 10 eingespeisten Stromes I₁ auf einem vorgegebenen Sollwert U_{DC ref} gehalten.

Der Sollwert U_{DC ref} der Spannung U_{DC} am Gleichspannungszwischenkreis 4 ist fest vorgegeben, falls der Gleichrichter 3 geregelt ist. Sofern der Gleichrichter 3 nicht geregelt ist, wird der Sollwert U_{DC ref} durch ein der Antriebseinheit 1 zugeordnetes Antriebsmodul 61 bestimmt. In Fig. 1 ist symbolisch gezeigt, dass der Sollwert U_{DC ref} durch entsprechendes Umschalten eines Schalters 94 zwischen einem bei geregeltem Gleichrichter 3 gebildeten Wert U_{DC ref CR} und einem vom Antriebsmodul 61 gebildeten Wert U_{DC ref TC} festgelegt wird.

In Abhängigkeit der Spannung U_{DC} am Gleichspannungszwischenkreis sowie dem entsprechenden Sollwert U_{DC ref} wird im Kontrollmodul 100 in einem Gleichspannungsregler 20 ein Sollwert i_{d ref} für den Strom I₁ gebildet und einem nachgeschalteten Stromregler 23 zugeführt, von dem, in Abhängigkeit der Differenz von Sollwert i_{d ref} und Istwert I₁ des Stromes, ein Steuersignal gebildet und über einen Eingangswähler 50 an einen zur Ansteuerung des Wechselrichters 5 vorgesehenen Modulator 51, beispielsweise an einen Pulsweitenmodulator abgegeben wird.

Durch die Messung und Berücksichtigung von Wirkleistungs- und Blindleistungskomponenten d und q kann mittels des Stromreglers 23 neben der Wirkleistung auch die Blindleistung geregelt werden. Dem Modulator 51 wird in diesem Fall zusätzlich ein entsprechend gewähltes Steuersignal ϕ zugeführt.

Beim Ausfall des externen Stromversorgungsnetzes 10 erfolgt eine Umschaltung in die Betriebsart "Netz ausgefallen". Sofern dies nicht bereits durch anderweitige Mittel erfolgt ist, erfolgt die Trennung zum externen Stromversorgungsnetz 10 durch Öffnen des von der Kontrolleinheit 100 gesteuerten Schalters 91. Ferner wird bei einem Netzausfall durch automatische Abschaltung von Lasten 8 mit tieferer Versorgungspriorität die Gesamtlast aller Verbraucher auf einen Wert begrenzt, der kleiner ist, als die Nennleistung der erfindungsgemässen Stromerzeugungsanlage. Zur Vermeidung von Spannungs- und Phasensprüngen wird bei der Umschaltung der Regelung darauf geachtet, dass der Betrag sowie der Phasenwinkel der Ausgangsspannung U₁ vor und nach der Umschaltung praktisch unverändert sind.

Bei der Wiederanschaltung an das externe Stromversorgungsnetz 10 bzw. vor dem Schliessen des Schalters 91 werden Betrag, Frequenz und Phasenlage der Ausgangsspannungen des externen Stromversorgungsnetzes und der Stromerzeugungsanlage durch eine Synchronisiereinheit 13 (siehe Fig. 2) miteinander verglichen und durch Steuerung der Stromerzeugungsanlage aufeinander abgestimmt. Die Synchronisiereinheit 13 wird vorzugsweise ebenfalls in die Kontrolleinheit 100 integriert, deren Steuer- und Regelmodule vorzugsweise mittels software realisiert sind.

Die erfindungsgemässe Stromerzeugungsanlage wird bei Netzausfall wie eine geregelte Spannungsquelle betrieben. Der komplexe Strom wird durch die Lasten 8 und 9 bestimmt. Die der Last 8, 9 durch die Stromerzeugungsanlage zur Verfügung gestellte Spannung U₁ wird durch den Wechselrichter 5 daher auf einen vorgesehenen Sollwert U_{1 ref} eingestellt. Die Abweichung zwischen der Spannung U₁ an der Sammelschiene 7 bzw. im Netzteilbereich und einem Sollwert U_{1 ref} wird durch einen Spannungsregler 41 festgestellt, welcher über den Eingangswähler 50 ein Steuersignal an den mit dem Wechselrichter 5 verbundenen Modulator 51 abgibt. Vom Wechselrichter 5 wird die Spannung U₁ entsprechend eingestellt.

Das Gleichgewicht von zugeführter und an die Verbraucher abgegebener Energie wird durch Steuerung der Antriebseinheit 1 eingestellt, wobei der Gleichspannungszwischenkreis 4 als Puffer dient. Dazu wird die Spannung U_{DC} am Gleichspannungszwischenkreis 4 durch Änderung der Leistung P_{T} der Antriebseinheit 1 auf einem vorgegebenen Sollwert U_{DC ref} gehalten. Die Spannung U_{DC} am Gleichspannungszwischenkreis 4 wird in einer ersten Differenzstufe 42 mit dem Sollwert U_{DC ref} verglichen. Das resultierende Differenzsignal wird über einen Antriebsregler 43, den entsprechend geschalteten Eingangswähler 60 dem Antriebsmodul 61 zugeführt, welches die Leistung der Antriebseinheit 1 ändert, bis die erwähnte Abweichung der Spannung U_{DC} wieder aufgehoben ist.

Sofern die Spannung U_{DC} am Gleichspannungszwischenkreis 4 nicht auf den Sollwert U_{DC ref} geregelt werden kann, wird in einer vorzugsweisen Ausgestaltung der Erfindung in einem Adaptionsblock 40 ein angepasster bzw. reduzierter Sollwert U_{1 ref} für die Ausgangsspannung U₁ gebildet. Durch die resultierende Herabsetzung der Ausgangsspannung U₁ reduziert sich die Lastanforderung, wodurch das Energiegleichgewicht wieder hergestellt werden kann. Ein Anwachsen der Spannung am Zwischenkreis 4 bei negativen Lastsprüngen wird vorzugsweise mittels eines Widerstandes (sogenannter Breaking-Chopper) begrenzt, der Überspannungen gegen Erde entlädt.

In einer weiteren vorzugsweisen Ausgestaltung der Erfindung wird der Gleichspannungszwischenkreis 4 mit einem Energiespeicher 4a verbunden, der eine hohe Qualität der Stromversorgung bei Netzausfall auch für längere Zeit gewährleistet.

Die erfindungsgemässe Stromerzeugungsanlage kann in einer vorzugsweisen Ausgestaltung in einer dritten Betriebsart betrieben werden, die Fälle berücksichtigt, bei denen das externe Stromversorgungsnetz 10 nicht genügend Leistung für alle Lasten 8, 9 zur Verfügung stellt. Bei dieser als "Netz schwach" bezeichneten Betriebsart wird die Stromerzeugungsanlage derart gesteuert und geregelt, dass der vom externen Stromversorgungsnetz 10 gelieferte Strom I_{N} gemessen und durch Änderung des vom Wechselrichter 5 abgegebenen Stromes I₁ auf einen vorgegebenen Grenzwert I_{N ref} limitiert oder geregelt wird.

Die Werte des vom externen Stromversorgungsnetz 10 gelieferten Stromes I_{N} werden in einer zweiten Differenzstufe 30 mit dem vorgegebenen Grenzwert I_{N ref} verglichen. Das resultierende Differenzsignal wird einem Netzstromregler 32 zugeführt, welcher entsprechende Sollwerte i_{d} und iq für den Strom berechnet und an den Stromregler 23 weiterleitet.

Das Gleichgewicht der dem als Puffer dienenden Zwischenkreis 4 zu- und davon weggeführten Energie wird bei dieser Betriebsart durch Steuerung der Antriebseinheit 1 eingestellt. Wie oben beschrieben, wird dazu die Spannung U_{DC} am Gleichspannungszwischenkreis 4 durch Änderung der Leistung P_{T} der Antriebseinheit 1 auf einem vorgegebenen Sollwert U_{DC ref} gehalten.

Die Spannung und deren Frequenz werden bei dieser Betriebsart durch das externe Stromversorgungsnetz 10 bestimmt. Die erfindungsgemässe Stromerzeugungsanlage sorgt dafür, dass der maximale Strom I_{N} im Netzzweig nicht überschritten wird. Wird der Strom I_{N} auf einen Wert unterhalb des Maximalwerts geregelt, so steht die resultierende Differenz zur Abdeckung von Lastsprüngen zur Verfügung, denen die erfindungsgemässe Stromerzeugungsanlage nicht schnell genug folgen kann.

Die erfindungsgemässe Stromerzeugungsanlage wird vorzugsweise für die Umschaltung zwischen allen beschriebenen Betriebsarten "Netz normal", "Netz schwach" und "Netz ausgefallen" ausgelegt. Eine Umschaltung erfolgt vorzugsweise in Abhängigkeit der gemessenen Netzimpedanz, für die Umschaltpunkte definiert werden. Die erfindungsgemässe Stromerzeugungsanlage kann jedoch auch vorteilhaft nur in einer einzelnen oder in zwei der Betriebsarten betrieben werden. Sinnvoll kann insbesondere auch eine Umschaltung zwischen den Betriebsarten "Netz schwach" und "Netz ausgefallen" sein.

### Bezugszeichenliste

- 1: Antriebseinheit (Turbine)
- 2: Generator
- 3: Gleichrichter
- 4: Gleichspannungszwischenkreis
- 5: Wechselrichter
- 6: Filter
- 7: Netzteilbereich (z.B. Sammelschiene)
- 8, 9: Last(en)
- 10: externes Stromversorgungsnetz
- 11: externe Stromversorgungsanlage
- 13: Synchronisiereinheit
- 14: Umrichter
- 20: Gleichspannungsregler
- 21: erstes Regfermodul
- 23: Stromregler
- 30: zweite Differenzstufe
- 31: zweites Reglermodul
- 32: Netzstromregler
- 40: Adaptionsblock
- 41: Spannungsregler
- 42: erste Differenzstufe
- 43: Antriebsregler
- 50: erster Eingangswähler
- 51: Modulator
- 60: zweiter Eingangswähler
- 61: Antriebsmodul
- 80: Überwachungsmodul
- 91: erster Schalter
- 92: zweiter Schalter
- 93: dritter Schalter
- 94: Umschalter für den Sollwert U_{DC ref}
- 100: Kontrolleinheit

## Patentansprüche

1. Stromerzeugungsanlage mit einem mit einer Antriebseinheit (1), insbesondere mit einer Turbine gekoppelten Generator (2), der über einen aus einem Gleichrichter (3), einem Gleichspannungszwischenkreis (4) und einem Wechselrichter (5) bestehenden Umrichter (14) mit einem über einen Schalter (91) mit einem externen Stromversorgungsnetz (10) sowie wenigstens einer Last (8, 9) verbundenen Netzteilbereich, insbesondere einer Sammelschiene (7), verbindbar ist, sowie mit einer zur Steuerung und Regelung der Stromerzeugungsanlage dienenden Kontrolleinheit (100), **dadurch gekennzeichnet, dass** die Kontrolleinheit (100) ein Überwachungsmodul (80) aufweist, das zur Feststellung des Zustandes des externen Stromversorgungsnetzes (10) dient und die Betriebsarten der Stromerzeugungsanlage zumindest entsprechend den Zuständen "Netz normal" und "Netz ausgefallen" umschaltet, wobei
a) bei der Betriebsart "Netz normal" die Stromerzeugungsanlage derart steuerbar und regelbar ist, dass bei Vorgabe einer Antriebsleistung (P_{T}) die Spannung (U_{DC}) am Gleichspannungszwischenkreis (4) durch Änderung des vom Wechselrichter (5) an die Last (8, 9) abgegebenen und gegebenenfalls in das externe Stromversorgungsnetz (10) eingespeisten Stromes (I₁) auf einem vorgegebenen Sollwert (U_{DC ref}) gehalten wird und
b) bei der Betriebsart "Netz ausgefallen" die Stromerzeugungsanlage derart steuerbar und regelbar ist, dass die Verbindung zum externen Stromversorgungsnetz (10) getrennt, die der Last (8, 9) zur Verfügung gestellte Spannung (U₁) durch den Wechselrichter (5) auf einen vorgesehenen Wert (U_{1 ref}) einstellbar und die Spannung (U_{DC}) am Gleichspannungszwischenkreis (4) durch Änderung der Leistung (P_{T}) der Antriebseinheit (1) auf einem vorgegebenen Sollwert (U_{DC ref}) einstellbar ist.

2. Stromerzeugungsanlage nach Anspruch 1, **dadurch gekennzeichnet, dass** beim Umschalten auf die Betriebsart "Netz ausgefallen" Lasten (8) derart abschaltbar sind, dass die von der Stromerzeugungsanlage erzeugte Leistung stets grösser ist als die von den nicht abgeschalteten Lasten (9) aufgenommene Leistung.

3. Stromerzeugungsanlage nach Anspruch 1 oder 2, **dadurch gekennzeichnet, dass** die an die Last (8, 9) angelegte Spannung (U₁) reduzierbar ist, sobald die Spannung (U_{DC}) am Gleichspannungszwischenkreis (4) durch Änderung der Leistung (P_{T}) der Antriebseinheit (1) nicht auf einen vorgegebenen Sollwert (U_{DC ref}) einstellbar ist.

4. Stromerzeugungsanlage insbesondere nach einem der Ansprüche 1-3 mit einem mit einer Antriebseinheit (1) insbesondere einer Turbine gekoppelten Generator (2), der über einen aus einem Gleichrichter (3), einem Gleichspannungszwischenkreis (4) und einem Wechselrichter (5) bestehenden Umrichter (14) mit einem über einen Schalter (91) mit einem externen Stromversorgungsnetz (10) sowie wenigstens einer Last (8, 9) verbundenen Netzteilbereich, insbesondere einer Sammelschiene (7), verbindbar ist, sowie mit einer zur Steuerung und Regelung der Stromerzeugungsanlage dienenden Kontrolleinheit (100), **dadurch gekennzeichnet, dass** die Kontrolleinheit (100) ein Überwachungsmodul (80) aufweist, das zur Feststellung des Zustandes des externen Stromversorgungsnetzes (10) dient und die Betriebsarten der Stromerzeugungsanlage zumindest entsprechend den Zuständen "Netz normal", "Netz ausgefallen" und/oder "Netz schwach" umschaltet, wobei
c) bei der Betriebsart "Netz schwach" die Stromerzeugungsanlage derart steuerbar und regelbar ist, dass der vom externen Stromversorgungsnetz (10) gelieferte Strom (I_{N}) gemessen und durch Änderung des vom Wechselrichter (5) an die Last (8, 9) abgegebenen Stromes (I₁) auf einen vorgegebenen Grenzwert (I_{N ref}) limitiert oder geregelt wird.

5. Stromerzeugungsanlage nach Anspruch 4, **dadurch gekennzeichnet, dass** die Spannung (U_{DC}) am Gleichspannungszwischenkreis (4) durch Änderung der Leistung (P_{T}) der Antriebseinheit (1) auf einem vorgegebenen Sollwert (U_{DC ref}) gehalten wird.

6. Stromerzeugungsanlage nach einem der Ansprüche 1-5, **dadurch gekennzeichnet, dass** der Sollwert (U_{DC ref}) der Spannung (U_{DC}) am Zwischenkreis (4), der vorzugsweise mit einem Kondensator und/oder weiteren Energiespeichern (4a) versehen ist, bei Verwendung eines geregelten Gleichrichters (3) vorgegeben und sonst durch ein zur Steuerung oder Regelung der Antriebseinheit (1) vorgesehenes Modul (61) festgelegt wird.

7. Stromerzeugungsanlage nach einem der Ansprüche 1-6, **dadurch gekennzeichnet, dass** bei der Betriebsart "Netz normal" oder "Netz schwach" die vom Wechselrichter (5) abgegebene Wirkleistung sowie die Blindleistung gesteuert oder geregelt wird.

8. Verfahren zur Steuerung und Regelung einer Stromerzeugungsanlage, die einen mit einer Antriebseinheit (1) insbesondere einer Turbine gekoppelten Generator (2) aufweist, der über einen aus einem Gleichrichter (3), einem Gleichspannungszwischenkreis (4) und einem Wechselrichter (5) bestehenden Umrichter (14) mit einem über einen Schalter (91) mit einem externen Stromversorgungsnetz (10) sowie wenigstens einer Last (8, 9) verbundenen Netzteilbereich, insbesondere einer Sammelschiene (7), verbindbar ist, **dadurch gekennzeichnet, dass** in Abhängigkeit des Zustandes des externen Stromversorgungsnetzes (10) die Betriebsarten der Stromerzeugungsanlage zumindest entsprechend den Zuständen "Netz normal" und "Netz ausgefallen" eingestellt werden, wobei
a) bei der Betriebsart "Netz normal", bei Vorgabe einer Antriebsleistung (P_{T}), die Spannung (U_{DC}) am Gleichspannungszwischenkreis (4) durch Änderung des vom Wechselrichter (5) an die Last (8, 9) abgegebenen und gegebenenfalls in das externe Stromversorgungsnetz (10) eingespeisten Stromes (I₁) auf einem vorgegebenen Sollwert (U_{DC ref}) gehalten wird und
b) bei der Betriebsart "Netz ausgefallen" die Verbindung zum externen Stromversorgungsnetz (10) getrennt, die der Last (8, 9) zur Verfügung gestellte Spannung (U₁) durch den Wechselrichter (5) auf einen vorgesehenen Wert (U_{1 ref}) eingestellt und die Spannung (U_{DC}) am Gleichspannungszwischenkreis (4) durch Änderung der Leistung (P_{T}) der Antriebseinheit (1) auf einem vorgegebenen Sollwert (U_{DC ref}) gehalten wird.

9. Stromerzeugungsanlage nach Anspruch 8, **dadurch gekennzeichnet, dass** beim Umschalten auf die Betriebsart "Netz ausgefallen" Lasten (8) derart abgeschaltet werden, dass die von der Stromerzeugungsanlage erzeugte Leistung stets grösser ist als die von den nicht abgeschalteten Lasten (9) aufgenommene Leistung.

10. Stromerzeugungsanlage nach Anspruch 8 oder 9, **dadurch gekennzeichnet, dass** die an die Last (8, 9) angelegte Spannung (U₁) reduziert wird, sobald die Spannung (U_{DC}) am Gleichspannungszwischenkreis (4) durch Änderung der Leistung (P_{T}) der Antriebseinheit (1) nicht auf einen vorgegebenen Sollwert (U_{DC ref}) eingestellt werden kann.

11. Verfahren insbesondere nach einem der Ansprüche 8-10 zur Steuerung und Regelung einer Stromerzeugungsanlage, die einen mit einer Antriebseinheit (1) insbesondere einer Turbine gekoppelten Generator (2) aufweist, der über einen aus einem Gleichrichter (3), einem Gleichspannungszwischenkreis (4) und einem Wechselrichter (5) bestehenden Umrichter (14) mit einem über einen Schalter (91) mit einem externen Stromversorgungsnetz (10) sowie wenigstens einer Last (8, 9) verbundenen Netzteilbereich, insbesondere einer Sammelschiene (7), verbindbar ist, **dadurch gekennzeichnet, dass** in Abhängigkeit des Zustandes des externen Stromversorgungsnetzes (10) die Betriebsarten der Stromerzeugungsanlage zumindest entsprechend den Zuständen "Netz normal", "Netz ausgefallen" und/oder "Netz schwach" eingestellt werden, wobei
c) bei der Betriebsart "Netz schwach" die Stromerzeugungsanlage derart gesteuert und geregelt wird, dass der vom externen Stromversorgungsnetz (10) gelieferte Strom (I_{N}) gemessen und durch Änderung des vom Wechselrichter (5) an die Last (8, 9) abgegebenen Stromes (I₁) auf einen vorgegebenen Grenzwert (I_{N ref}) limitiert oder geregelt wird.

12. Verfahren nach Anspruch 11, **dadurch gekennzeichnet, dass** die Spannung (U_{DC}) am Gleichspannungszwischenkreis (4) durch Änderung der Leistung (P_{T}) der Antriebseinheit (1) auf einem vorgegebenen Sollwert (U_{DC ref}) gehalten wird.

13. Verfahren nach einem der Ansprüche 8-12, **dadurch gekennzeichnet, dass** der Sollwert (U_{DC ref}) der Spannung (U_{DC}) am Zwischenkreis (4) bei Verwendung eines geregelten Gleichrichters (3) vorgegeben und sonst durch ein zur Steuerung oder Regelung der Antriebseinheit (1) vorgesehenes Modul (61) festgelegt wird.

14. Verfahren nach einem der Ansprüche 8-13 **dadurch gekennzeichnet, dass** bei der Betriebsart "Netz normal" oder "Netz schwach" die vom Wechselrichter (5) abgegebene Wirkleistung sowie die Blindleistung gesteuert oder geregelt wird.
